Europäisches Patentamt

European Patent Office

Office européen des brevets

(19)

(11) Veröffentlichungsnummer : **0 332 974 B1**

(12)

# EUROPÄISCHE PATENTSCHRIFT

(45) Veröffentlichungstag der Patentschrift :
**14.10.92 Patentblatt 92/42**

(51) Int. Cl.$^5$ : **H02H 7/08**

(21) Anmeldenummer : **89103920.8**

(22) Anmeldetag : **06.03.89**

(54) **Kurzschlussschutz für eine motorisch sowie generatorisch betreibbare pulsumrichtergespeiste elektrische Maschine.**

(30) Priorität : **18.03.88 DE 3809203**

(43) Veröffentlichungstag der Anmeldung :
**20.09.89 Patentblatt 89/38**

(45) Bekanntmachung des Hinweises auf die
Patenterteilung :
**14.10.92 Patentblatt 92/42**

(84) Benannte Vertragsstaaten :
**CH DE FR GB IT LI NL SE**

(56) Entgegenhaltungen :
**FR-A- 2 577 079**
**PATENT ABSTRACTS OF JAPAN vol. 6, no.**
**222 (E-140) 1100 06 November 1982, & JP-A-57**
**126284**

(73) Patentinhaber : **SIEMENS**
**AKTIENGESELLSCHAFT**
**Wittelsbacherplatz 2**
**W-8000 München 2 (DE)**

(72) Erfinder : **Nerowski, Georg, Dr.**
**Hans-Sachs-Strasse 26**
**W-8560 Lauf (DE)**
Erfinder : **Piepenbreier, Bernhard, Dr.**
**Am Wäldla 2**
**W-8551 Hemhofen (DE)**
Erfinder : **Tölle, Hans-Jürgen, Dipl.-Ing.**
**Am Europakanal 36**
**W-8520 Erlangen (DE)**

EP 0 332 974 B1

## Beschreibung

Die Erfindung betrifft einen Kurzschlußschutz für eine motorisch sowie generatorisch betreibbare pulsumrichtergespeiste elektrische Maschine, d.h. eine Maschine, die in allen vier Quadranten der Drehzahl-Drehmoment-Ebene betriebsfähig ist und die bei einem Kurzschluß auf der Gleichstromeinspeisung von der äußeren Energieversorgung abgeschaltet wird. Bei Verwendung von auf Kurzschuß ansprechenden Sicherungen ist ein zeitaufwendiger Austausch der Sicherungen notwendig, bei Verwendung von mechanischen Schaltmitteln mit nicht vernachlässigbaren Ansprechverzögerung kann der Kurzschlußstrom bis zum Unterbrechen der Energiezufuhr unzulässig hohe Werte erreichen.

Aufgabe der Erfindung ist es daher, mit schnell wirkenden, nicht einer Auswechselung unterliegenden Mitteln einen sicheren Kurzschlußschutz für eine obengenannte pulsumrichtergespeiste elektrische Maschine zu schaffen, wobei vorausgesetzt ist, daß der Pulsumrichter üblicherweise einen Zwischenkreiskondensator und Freilaufdioden zu den einzelnen steuerbaren Halbleitern des Pulsumrichters enthält.

Die Lösung der gestellten Aufgabe gelingt durch die kennzeichnenden Merkmale des Anspruchs 1. Zur Unterbindung von Schaltüberspannungen infolge schneller Stromänderungen in den Induktivitäten der Gleichstromzuleitungen ist eine zusätzliche Maßnahme nach Anspruch 2 vorgesehen.

Als schaltbare antiparallele Leistungshalbleiter können Transistoren, GTO oder ähnlich wirkende elektronische Schaltmittel dienen, die in Schaltabhängigkeit von einer elektronischen Überwachungseinrichtung gebracht sind, die z.B. eine $U_{CE}$-Überwachung eines Transistors vornimmt. Die Überwachungseinrichtung ist mit mindestens einer der Gleichstromzuleitungen elektrisch verbunden, so daß sie einen einspeiseseitigen Kurzschluß erfassen kann.

Zur Unterbindung von Schaltüberspannungen ist vor der Antiparallelschaltung zwischen den beiden Gleichstromzuleitungen eine Zusatzdiode angeschlossen, über die im Normalfall kein Strom fließen kann.

Einige vereinfachte Ausführungsbeispiele sind schematisch in der Zeichnung dargestellt und nachfolgend erläutert.

Eine in allen Quadranten der Drehzahl-Drehmoment-Ebene betreibbare elektrische Maschine M ist im Brückenzweig eines Pulsumrichters UR mit vier steuerbaren Halbleitern H, diesen zugeordneten Freilaufdioden D sowie einem vorgeordneten gemeinsamen Zwischenkreiskondensator C angeordnet. Diese Anordnung ist über Gleichstromzuleitungen L+ und L- an eine nicht dargestellte Gleichstromeinspeisung angeschlossen.

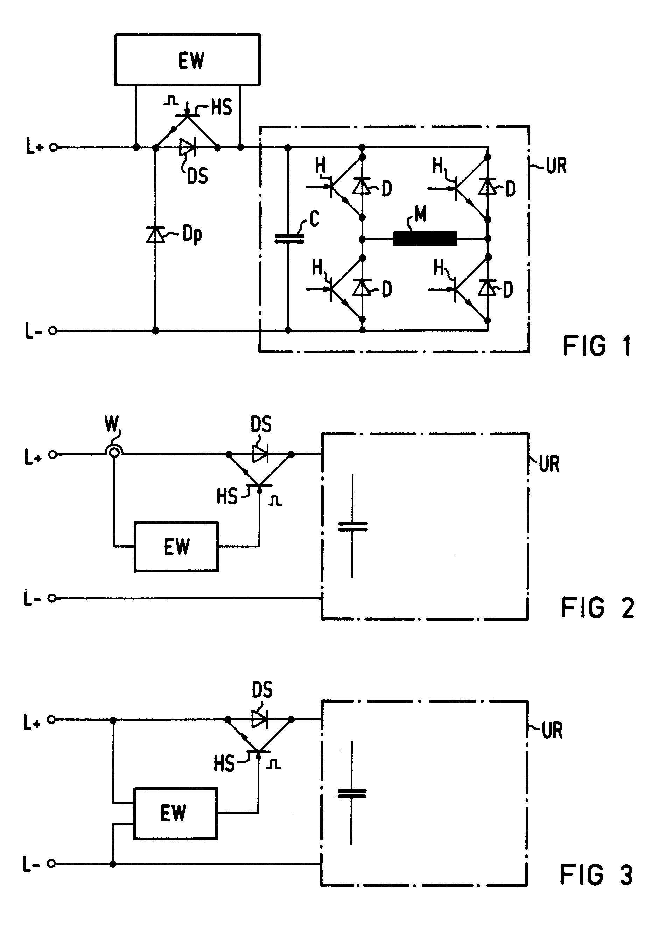

Im Zuge einer der Gleichstromzuleitungen (L+) ist gemäß Fig. 1 eine bei motorischem Betrieb der Maschine M stromdurchlässig gepolte Schutzdiode DS vor dem Pulsumrichter UR samt Zwischenkreiskondensator C angeordnet, die von einem steuerbaren Leistungshalbleiter HS mit entgegengesetzter Stromdurchlaßrichtung überbrückt ist (Antiparallelschaltung), so daß sowohl ein Motorstrom als auch ein Generatorstrom der Maschine M bei einwandfreier Gleichstromeinspeisung fließen kann.

Bei Kurzschluß auf der Gleichstromeinspeisung vor der besagten Antiparallelschaltung würde sich ohne den Kurzschlußschutz der Zwischenkreiskondensator C über die Kurzschlußstelle zwischen L+ und L- entladen und wegen der sich dann abbauenden Kondensatorspannung über die Freilaufdioden D ein Maschinenkurzschlußstrom ausbilden können.

Der Kurzschlußschutz weist hierzu eine schnellauslösende Überwachungseinrichtung EW für den Leistungshalbleiter HS der Antiparallelschaltung auf, der im Bereich der Antiparallelschaltung an die betreffende Gleichstromzuleitung L+ angeschlossen ist und einen Kurzschluß in der Gleichstromeinspeisung erkennt, indem sie die $U_{CE}$-Spannung des Leistungshalbleiters (Transistors) HS überwacht und bei Kurzschluß in der Gleichstrom-Einspeisung innerhalb von Mikrosekunden einen Sperrbefehl an den Leistungshalbleiter HS gibt, bevor der Kurzschlußstrom auf einen gefährlichen Wert ansteigen kann. Dadurch wird eine nennenswerte Entladung des Zwischenkreiskondensators C und damit ein Maschinenkurzschlußstrom verhindert.

Die Überwachungseinrichtung EW kann gemäß Fig. 2 auch über einen Stromwandler W an eine Gleichstromzuleitung angeschlossen und mit dem Leistungshalbleiter HS verbunden sein oder es kann nach Fig. 3 die Überwachungseinrichtung EW an beide Gleichstromzuleitungen galvanisch angeschlossen sein.

Zur Vermeidung von Schaltüberspannungen am Leistungshalbleiter HS infolge schneller Stromänderungen aufgrund der Leitungsinduktivitäten der Gleichstromeinspeisung ist zwischen den Gleichstromzuleitungen L+ und L- in Verbindung mit der Antiparallelschaltung HS,DS eine Diode Dp vorgesehen.

## Patentansprüche

1. Kurzschlußschutz für eine in allen Quadranten des Drehzahl-Drehmoment-Kennfeldes betreibbare pulsumrichtergespeiste elektrische Maschine (M),
   **dadurch gekennzeichnet,**

daß in einer Gleichstromzuleitung (L+/L-) eine Antiparallelschaltung aus einer nur den motorischen Maschinenstrom durchlassend gepolten Schutzdiode (DS) und einem nur den generatorischen Maschinenstrom durchlassenden steuerbaren Leistungshalbleiter (HS) angeordnet ist, der in Ausschalt-Abhängigkeit von einer einen Kurzschluß in der Gleichstromeinspeisung erfassenden schnellauslösenden Überwachungseinrichtung (EW) steht, so daß ein Zwischenkreiskondensator (C) des Pulsumrichters (UR) von der Kurzschlußstelle in der Gleichstromeinspeisung getrennt ist und die Spannung des Zwischenkreiskondensators (C) einen Maschinenkurzschlußstrom über die Freilaufdioden (D) des Umrichters (UR) unterbindet.

2. Kurzschlußschutz nach Anspruch 1,
**dadurch gekennzeichnet,**
daß im Anschlußbereich der Antiparallelschaltung zwischen den beiden Gleichstromzuleitungen (L+,L-) eine Diode (Dp) angebracht ist.

**Claims**

1. Short-circuit protection device for an electrical machine (M) fed by a pulse-controlled a.c. converter and operative in all the quadrants of the speed of rotation-torque-characteristics,
**characterised in that,**
in a d.c. supply line (L+/-) there is arranged a reverse parallel circuit comprising a poled protective diode (DS) permeable only to the motor machine current, and a controllable power semi-conductor (HS) permeable only to the generator machine current, which is in switch-off dependence on an instantaneous-triggering monitoring device (EW) detecting a short circuit in the d.c. supply line so that an intermediate circuit capacitor (C) of the pulse-controlled a.c. converter (UR) is isolated from the short-circuit point in the d.c. supply line, and the voltage of the intermediate circuit capacitor (C) prevents a machine short-circuit current in the free-wheeling diodes (D) of the converter (UR).

2. Short-circuit protection device according to claim 1,
**characterised in that,**
in the connection region of the reverse parallel circuitry a diode (Dp) is fitted between the two d.c. supply lines (L+, L-).

**Revendications**

1. Dispositif de protection contre les court-circuits pour une machine électrique (M) alimentée par un convertisseur d'impulsions et pouvant fonctionner dans l'ensemble des quadrants du champ de caractéristiques vitesse de rotation-couple,
caractérisé par le fait
que dans une ligne (L+/-)-d'alimentation en courant continu est disposé un circuit antiparallèle formé d'une diode de protection (DS) polarisée de manière à laisser passer uniquement le courant de la machine fonctionnant en moteur, et un semiconducteur de puissance commandable (HS), qui laisse passer uniquement le courant de la machine fonctionnant en génératrice et qui est lié, selon une liaison de dépendance dans le sens de la coupure, à un dispositif de contrôle (EW) à déclenchement rapide, qui détecte un court-circuit dans le système d'alimentation en courant continu, de sorte qu'un condensateur intercalaire (C) du convertisseur d'impulsions (UR) est séparé du point de court-circuit dans le système d'alimentation en courant continu et que la tension du condensateur intermédiaire (C) bloque un courant de court-circuit de la machine au moyen des diodes à effet unidirectionnel (D) du convertisseur (UR).

2. Dispositif de protection contre des court-circuits suivant la revendication 1, caractérisé par le fait qu'une diode (Dp) est montée dans la zone de raccordement du circuit antiparallèle entre les deux lignes d'alimentation en courant continu (L+, L-).

FIG 1

FIG 2

FIG 3